# EUROPÄISCHE PATENTSCHRIFT

(11) **EP 3 886 561 B1**
(45) Veröffentlichungstag und Bekanntmachung des Hinweises auf die Patenterteilung: **22.05.2024**
(21) Anmeldenummer: 19805231.8
(22) Anmeldetag: 14.11.2019
(51) Int. Cl.: A01C 17/00

(54) **VERFAHREN ZUM ÜBERPRÜFEN DER QUERVERTEILUNG EINER STREUGUTSORTE**
METHOD OF VERIFICATION OF THE TRANSVERSE DISTRIBUTION OF A SPREADING MATERIAL TYPE
PROCÉDÉ DE VÉRIFICATION DE LA DISTRIBUTION TRANSVERSALE D'UN TYPE DE MATÉRIAU À ÉPANDRE

(30) Priorität: 26.11.2018 DE 102018129712
(43) Veröffentlichungstag der Anmeldung: 06.10.2021
(73) Patentinhaber: Amazonen-Werke H. Dreyer SE & Co. KG, 49205 Hasbergen (DE)
(72) Erfinder: RAHE, Florian, 49504 Lotte (DE); STRÖBEL-FRÖSCHLE, Markus, 49124 Georgsmarienhütte (DE)
(86) Internationale Anmeldenummer: PCT/EP2019/081269
(87) Internationale Veröffentlichungsnummer: WO 2020/109012

(56) Entgegenhaltungen:
- EP-A1- 3 087 817
- EP-A1- 3 216 334
- EP-B1- 2 923 546
- DE-A1-102016 115 764

## Beschreibung

Die Erfindung betrifft ein Verfahren zum Überprüfen der Querverteilung einer Streugutsorte nach dem Oberbegriff des Patentanspruchs 1.

Bei der Ausbringung von Streugut auf einer landwirtschaftlichen Nutzfläche sind an der zu verwendenden landwirtschaftlichen Ausbringmaschine geeignete Einstellungen vorzunehmen, damit eine gewünschte Querverteilung des Streuguts umgesetzt wird. Hierzu ist an der landwirtschaftlichen Ausbringmaschine ein geeigneter Aufgabepunkt des auszubringenden Streuguts auf die Verteilscheiben der landwirtschaftlichen Ausbringmaschine einzustellen. Ferner ist beispielsweise eine geeignete Scheibendrehzahl für den auszuführenden Ausbringvorgang zu ermitteln.

Hierzu kann eine Prüfausbringung durchgeführt werden, bei welcher das Streugut vor dem eigentlichen Ausbringvorgang zu Prüfzwecken mittels der landwirtschaftlichen Ausbringmaschine auf der landwirtschaftlichen Nutzfläche ausgebracht wird. Mittels eines mobilen Verfahrens kann dann die tatsächliche Verteilung des während der Prüfausbringung ausgebrachten Streuguts auf der landwirtschaftlichen Nutzfläche erfasst werden. Die die tatsächliche Querverteilung des während der Prüfausbringung ausgebrachten Streuguts betreffenden Querverteilungsinformationen können dann einer Auswerteeinrichtung zur Verfügung gestellt werden.

Die Druckschriften EP 2 923 546 B1, EP 3 216 334 A1, DE 10 2016 115 764 A1 und EP 3 087 817 A1 betreffen entsprechende mobile Verfahren zum Erfassen von Querverteilungsinformationen, wobei eine als Düngeservice-Server ausgebildete Auswerteeinrichtung auf Grundlage der bereitgestellten Querverteilungsinformationen Soll-Einstellwerte für die Ausbringmaschine ermittelt.

Im Stand der Technik ist es somit bereits bekannt, geeignete Einstellempfehlungen auf Grundlage einer zuvor durchgeführten Prüfausbringung zu ermitteln. Hierbei wird jedoch keine Bewertung der durchgeführten Prüfausbringung durchgeführt. Somit werden dem Landwirt auch keine Informationen darüber bereitgestellt, in welchem Maße sich die bei der Prüfausbringung eingestellten und die Querverteilung beeinflussenden Einstellparameter der landwirtschaftlichen Ausbringmaschine zur Ausbringung einer speziellen Streugutsorte noch eignen. Landwirte, welche ein entsprechendes mobiles Verfahren nicht durchführen, können somit nicht von den Prüfausbringungen anderer Landwirte profitieren, da keine Informationen darüber vorliegen, inwieweit veröffentlichte Einstellempfehlungen für die die Querverteilung beeinflussenden Einstellparameter einer landwirtschaftlichen Ausbringmaschine für die Ausbringung einer speziellen Streugutsorte noch akzeptabel sind.

Die der Erfindung zugrundeliegende Aufgabe besteht somit darin, eine Bewertungsmöglichkeit von Einstellempfehlungen für die Querverteilung beeinflussende Einstellparameter einer landwirtschaftlichen Ausbringmaschine bezogen auf einzelne Streugutsorten zu schaffen.

Die Aufgabe wird gelöst durch ein Verfahren der eingangs genannten Art, wobei die der Auswerteeinrichtung bereitgestellten Querverteilungsinformationen mit einer für die durchgeführte Prüfausbringung erwarteten Querverteilung der Streugutsorte durch die Auswerteeinrichtung verglichen wird.

Die Erfindung macht sich die Erkenntnis zunutze, dass durch eine Bewertung der tatsächlichen Querverteilung im Lichte der erwarteten Querverteilung eine Aussage darüber getroffen werden kann, inwieweit Einstellempfehlungen für die landwirtschaftliche Ausbringmaschine zur Ausbringung einer Streugutsorte noch akzeptabel sind. Landwirte können sich somit beispielsweise für die Ausbringung von Streugutsorten entscheiden, bei welchen veröffentlichte Einstellempfehlungen zu einer gewünschten Querverteilung führen. In diesem Fall ist eine Durchführung einer Prüfausbringung und eine auf der Prüfausbringung basierende Anpassung der Einstellparameter nicht notwendig. Außerdem kann auf Basis des Vergleichs der bereitgestellten Querverteilungsinformationen mit der für die durchgeführte Prüfausbringung erwarteten Querverteilung der Streugutsorte eine Anpassung bzw. Aktualisierung der Einstellempfehlungen für diese Streugutsorte erfolgen.

Die erwartete Querverteilung kann eine gleichmäßige Querverteilung sein, wenn im Rahmen der Prüfausbringung zwei Fahrten auf benachbarten Fahrgassen ausgeführt wurden und mittels des mobilen Verfahrens die Querverteilung zwischen den Fahrgassen erfasst wird. In diesem Fall kann mittels des Vergleichs ein Variationskoeffizient ermittelt werden, welcher die Variation der tatsächlichen Querverteilung von der erwarteten gleichmäßigen Querverteilung der Streugutsorte betrifft. Alternativ kann die erwartete Querverteilung jedoch auch eine ungleichmäßige Querverteilung sein. Insbesondere, wenn im Rahmen der Prüfausbringung lediglich eine Fahrt entlang einer Fahrgasse ausgeführt wird, ist eine ungleichmäßige Querverteilung zu erwarten, da eine gleichmäßige Querverteilung üblicherweise erst durch eine zweite Fahrt entlang einer benachbarten Fahrgasse realisiert werden kann.

Die Streugutsorte kann eine Einzeldüngersorte oder eine Mischdüngersorte sein. Das Bereitstellen der erfassten Querverteilungsinformationen für die Auswerteeinrichtung erfolgt vorzugsweise über eine Anwendung auf einem mobilen Endgerät. Das mobile Endgerät kann beispielsweise ein Smartphone oder Tablet sein. Die Auswerteeinrichtung kann Bestandteil eines entfernt positionierten Zentralrechners sein. Das Bereitstellen der erfassten Querverteilungsinformationen für die Auswerteeinrichtung kann das Senden der erfassten Querverteilungsinformationen über Funk, insbesondere über Mobilfunk, umfassen.

In einer bevorzugten Ausführungsform des erfindungsgemäßen Verfahrens wird die tatsächliche Querverteilung der während der Prüfausbringung ausgebrachten Streugutsorte bewertet. Das Bewerten erfolgt dabei auf Grundlage des Vergleichs der bereitgestellten Querverteilungsinformationen mit der für die durchgeführte Prüfausbringung erwarteten Querverteilung der Streugutsorte durch die Auswerteeinrichtung. Durch die Bewertung der tatsächlichen Querverteilung können Abweichungen der tatsächlichen Querverteilung von der erwarteten Querverteilung der Streugutsorte festgestellt werden. Über die Ausprägung der Abweichungen der tatsächlichen Querverteilung von der erwarteten Querverteilung der Streugutsorte kann dann bewertet werden, inwieweit die tatsächliche Querverteilung der Streugutsorte noch akzeptabel ist.

Außerdem ist ein erfindungsgemäßes Verfahren vorteilhaft, bei welchem Einstellinformationen erfasst werden, welche die bei der Prüfausbringung eingestellten und die Querverteilung beeinflussenden Einstellparameter der landwirtschaftlichen Ausbringmaschine betreffen. Die erfassten Einstellinformationen können der Auswerteeinrichtung dann bereitgestellt werden. Auf Grundlage der bereitgestellten Einstellinformationen kann dann eine zu erwartende Querverteilung der Streugutsorte durch die Auswerteeinrichtung ermittelt werden. Dadurch, dass die Einstellinformationen erfasst und bereitgestellt werden, ist es nicht zwingend notwendig, dass der Landwirt während der Prüfausbringung Einstellparameter einstellt, welche zu einer im Wesentlichen gleichmäßigen Querverteilung der Streugutsorte führen. In diesem Fall kann das Ermitteln einer zu erwartenden Querverteilung der Streugutsorte beispielsweise aus einer Datenbank abgerufen werden. Alternativ oder zusätzlich kann die zu erwartende Querverteilung der Streugutsorte auch unter Berücksichtigung der bereitgestellten Einstellinformationen berechnet werden. Wenn die bei der Prüfausbringung eingestellten und die Querverteilung beeinflussenden Einstellparameter der landwirtschaftlichen Ausbringmaschine zu einer gleichmäßigen Querverteilung der Streugutsorte führen sollen, ist ein entsprechender Abruf oder eine entsprechende Berechnung einer zu erwartenden Querverteilung häufig nicht notwendig.

Vorzugsweise verfügt die Auswerteeinrichtung über eine Datenbank, welche verschiedenen, die Querverteilung beeinflussenden Einstellparametern einer landwirtschaftlichen Ausbringmaschine sortenbezogen zu erwartende Querverteilungen zuordnet. Die die Querverteilung beeinflussenden Einstellparameter der landwirtschaftlichen Ausbringmaschine umfassen beispielsweise die Scheibendrehzahl und/oder den Aufgabepunkt des Streuguts auf die Verteilscheiben der landwirtschaftlichen Ausbringmaschine. Die die Querverteilung beeinflussenden Einstellparameter der landwirtschaftlichen Ausbringmaschine können ferner die Wurfweite des Streuguts und/oder den Abwurfwinkel bzw. die Wurfrichtung des Streuguts betreffen. Die die Querverteilung beeinflussenden Einstellparameter der landwirtschaftlichen Ausbringmaschine können auch die Öffnungsgröße, die Öffnungsform und/oder die Öffnungsposition einer Streugut-Zuführöffnung der landwirtschaftlichen Ausbringmaschine betreffen. Wenn zur Ausbringung des Streuguts eine Streuscheibe mit einer oder mehreren Wurfschaufeln eingesetzt wird, können die die Querverteilung beeinflussenden Einstellparameter der landwirtschaftlichen Ausbringmaschine die Schaufelposition, die Schaufelneigung, die Schaufelausrichtung und/oder die Schaufellänge der einen oder der mehreren Wurfschaufeln der Streuscheibe der landwirtschaftlichen Ausbringmaschine betreffen. Wenn zur Ausbringung des Streuguts das Streugut über eine Zuführrutsche der landwirtschaftlichen Ausbringmaschine geleitet wird, können die die Querverteilung beeinflussenden Einstellparameter der landwirtschaftlichen Ausbringmaschine die Rutschenneigung, die Rutschenausrichtung und/der die Rutschenposition betreffen. Darüber hinaus können die die Querverteilung beeinflussenden Einstellparameter der landwirtschaftlichen Ausbringmaschine die Streuscheibe und/oder deren Geometrie und/oder deren Wurfschaufeltyp betreffen. Das Bereitstellen der Einstellinformationen für die Auswerteeinrichtung erfolgt vorzugsweise über eine Anwendung auf einem mobilen Endgerät.

In einer anderen Ausführungsform des erfindungsgemäßen Verfahrens werden die bei der Prüfausbringung eingestellten und die Querverteilung beeinflussenden Einstellparameter der landwirtschaftlichen Ausbringmaschine durch die Auswerteeinrichtung bewertet. Die Bewertung erfolgt auf Grundlage des Vergleichs der ermittelten Querverteilungsinformationen mit der für die durchgeführte Prüfausbringung erwarteten Querverteilung der Streugutsorte. Ferner kann auf diese Weise festgestellt werden, ob die bei der Prüfausbringung eingestellten und die Querverteilung beeinflussenden Einstellparameter der landwirtschaftlichen Ausbringmaschine noch zu akzeptablen Ausbringergebnissen führen.

In dem erfindungsgemäßen Verfahren ist vorgesehen, dass Empfehlungen für die die Querverteilung beeinflussenden Einstellparameter der landwirtschaftlichen Ausbringmaschine bereitgestellt werden. Insbesondere erfolgt das Bereitstellen der Empfehlungen in Abhängigkeit einer beabsichtigten Querverteilung. Das Verfahren kann ferner das Anpassen der Empfehlungen für die die Querverteilung beeinflussenden Einstellparameter der landwirtschaftlichen Ausbringmaschine auf Grundlage mehrerer der Auswerteeinrichtung bereitgestellter Querverteilungsinformationen umfassen. Die mehreren Querverteilungsinformationen wurden der Auswerteeinrichtung vorzugsweise von unterschiedlichen mobilen Endgeräten bereitgestellt und/oder betreffen unterschiedliche Prüfausbringungen, welche an unterschiedlichen Orten und/oder zu unterschiedlichen Zeiten durchgeführt wurden. Auf Grundlage dieser Querverteilungsinformationen von einer Vielzahl von Prüfausbringungen, existiert eine breite Datenbasis, welche das Ableiten neuer Empfehlungen für die die Querverteilung beeinflussenden Einstellparameter erlaubt. Das Verfahren kann ferner das Bereitstellen der angepassten Empfehlungen für die die Querverteilung beeinflussenden Einstellparameter der landwirtschaftlichen Ausbringmaschine umfassen. Das Bereitstellen der Empfehlungen und/oder das Bereitstellen der angepassten Empfehlungen kann mittels Streutabellen oder mittels einer Anwendung auf einem mobilen Endgerät erfolgen.

In einer anderen Ausführungsform des erfindungsgemäßen Verfahrens wird ein Benutzer informiert, dass eine bereitgestellte Empfehlung für die die Querverteilung beeinflussenden Einstellparameter der landwirtschaftlichen Ausbringmaschine für einen geplanten Ausbringvorgang ungeeignet ist. Alternativ oder zusätzlich kann ein Hersteller der Streugutsorte informiert werden, dass sich die Querverteilungseigenschaften der Streugutsorte verändert haben. Das Informieren des Benutzers erfolgt vorzugsweise über eine Anwendung auf einem mobilen Endgerät. Das Informieren des Herstellers erfolgt vorzugsweise direkt durch die Auswerteeinrichtung.

In einer weiteren Ausführungsform des erfindungsgemäßen Verfahrens werden Sorteninformationen erfasst, welche die bei der Prüfausbringung ausgebrachte Streugutsorte betreffen. Die erfassten Streugutinformationen können der Auswerteeinrichtung bereitgestellt werden. Vorzugsweise umfasst das Verfahren das Ermitteln einer zu erwartenden Querverteilung der Streugutsorte auf Grundlage der bereitgestellten Sorteninformationen durch die Auswerteeinrichtung. Das Bereitstellen der erfassten Sorteninformationen für die Auswerteeinrichtung erfolgt vorzugsweise über eine Anwendung auf einem mobilen Endgerät. Die Sorteninformationen können beispielsweise die Bezeichnung der Streugutsorte umfassen, welche bei der Prüfausbringung ausgebracht wurde. Ferner können die Sorteninformationen auch ein der ausgebrachten Streugutsorte zugeordnetes Kürzel oder einen der ausgebrachten Streugutsorte zugeordneten Code umfassen, welcher dann von der Auswerteeinrichtung der ausgebrachten Streugutsorte zugeordnet werden kann.

In einer weiteren Ausführungsform des erfindungsgemäßen Verfahrens umfasst das Erfassen der Sorteninformationen eine manuelle Eingabe der Sorteninformationen über eine Anwendung auf einem mobilen Endgerät und/oder das Auswerten von Bildmaterial zu der während der Prüfausbringung auf der landwirtschaftlichen Nutzfläche auszubringenden oder ausgebrachten Streugutsorte. Die manuelle Eingabe der Sorteninformationen kann eine alphanumerische Eingabe der Sortenbezeichnung umfassen. Ferner kann die manuelle Eingabe eine Auswahl aus einer Liste von Streugutsorten umfassen. Das auszuwertende Bildmaterial wird vorzugsweise über eine Anwendung auf einem mobilen Endgerät erzeugt. Die Auswertung des Bildmaterials kann durch das mobile Endgerät oder die Auswerteeinrichtung erfolgen. Im Rahmen der Bildmaterialauswertung kann beispielsweise die Korngröße, die Kornfarbe und/oder die Kornform der während der Prüfausbringung auszubringenden oder ausgebrachten Streugutsorte erfasst werden.

In einer Weiterbildung des erfindungsgemäßen Verfahrens wird das mobile Verfahren zum Erfassen von Querverteilungsinformationen zumindest teilweise auf der landwirtschaftlichen Nutzfläche und/oder unter Verwendung eines mobilen Endgeräts ausgeführt. Vorzugsweise wird das mobile Verfahren unmittelbar vor dem eigentlichen Ausbringvorgang ausgeführt.

In einer vorteilhaften Ausführungsform des erfindungsgemäßen Verfahrens umfasst das mobile Verfahren zum Erfassen von Querverteilungsinformationen das Positionieren von einer oder mehreren Auffangeinrichtungen auf der landwirtschaftlichen Nutzfläche vor dem Durchführen der Prüfausbringung und/oder das Erzeugen von Bildmaterial, welches die Verteilung des von der einen oder den mehreren Auffangeinrichtungen während der Prüfausbringung aufgefangenen Streuguts betrifft. Alternativ oder zusätzlich umfasst das mobile Verfahren das Auswerten des erzeugten Bildmaterials zum Erfassen der Querverteilungsinformationen. Beispielsweise werden mehrere Auffangeinrichtungen über die gesamte Breite oder einen Teilbereich der Breite zwischen zwei Fahrgassen positioniert. Im Rahmen der Prüfausbringung kann dabei beispielsweise eine einfache Fahrt entlang der Fahrgasse ausgeführt werden oder es werden zwei benachbarte Fahrgassen während der Prüfausbringung befahren. Das Erzeugen des Bildmaterials erfolgt vorzugsweise unter Verwendung eines mobilen Endgeräts. Das Auswerten des erzeugten Bildmaterials erfolgt vorzugsweise durch die Auswerteeinrichtung oder durch eine Anwendung auf einem mobilen Endgerät. Das erzeugte Bildmaterial sind vorzugsweise Fotos der Auffangeinrichtungen. Die Auffangeinrichtungen sind vorzugsweise Matten, insbesondere Kunststoffmatten. Die Auffangeinrichtungen können an ihrer Oberseite jeweils eine Vielzahl von Fangelementen, wie etwa Noppen, Stäbchen oder Fasern, aufweisen.

Das erfindungsgemäße Verfahren sieht vor, dass einem Benutzer eine Bewertungsmöglichkeit für die empfohlenen Einstellparameter bereitgestellt wird. Alternativ oder zusätzlich werden die von den Benutzern abgegebenen Bewertungen zu empfohlenen Einstellparametern für andere Benutzer bereitgestellt. Die Bewertung der Benutzer erfolgt vorzugsweise sortenbezogen. Die Bewertung kann unmittelbar nach einem Ausbringvorgang mit den empfohlenen Einstellparametern oder zeitlich versetzt, wenn das Ergebnis der Einstellung durch die Pflanzenentwicklung auf der landwirtschaftlichen Nutzfläche sichtbar ist, erfolgen. Die Bewertung kann durch die Vergabe von Punkten, Sternen, Noten oder Ähnlichem erfolgen. Andere Benutzer können durch die zur Verfügung stehenden Bewertungen entscheiden, ob diese die empfohlenen Einstellparameter ohne Anpassung bei der Ausbringung nutzen werden. Auf Grundlage der zur Verfügung stehenden Bewertung kann auch eine Auswahl einer zu verwendenden Streugutsorte erfolgen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine landwirtschaftliche Ausbringmaschine beim Durchführen einer Prüfausbringung auf einer landwirtschaftlichen Nutzfläche;
- Fig. 2: einen Benutzer beim Erzeugen von Bildmaterial im Rahmen des mobilen Verfahrens zum Erfassen von Querverteilungsinformationen;
- Fig. 3: das von dem in der Fig. 2 dargestellten Benutzer verwendete mobile Endgerät während des Erzeugens von Bildmaterial;
- Fig. 4: das von dem in der Fig. 2 dargestellten Benutzer verwendete mobile Endgerät während dem Bereitstellen weiterer Informationen;
- Fig. 5: eine von einer Auswerteeinrichtung durchgeführte Bewertung der bei einer Prüfausbringung eingestellten Einstellparameter;
- Fig. 6: eine von einer Auswerteeinrichtung durchgeführte Bewertung der bei einer weiteren Prüfausbringung eingestellten Einstellparameter;
- Fig. 7: ein mobiles Endgerät während dem Bereitstellen von Bewertungsinformationen; und
- Fig. 8: eine Anpassung von Empfehlungen für die die Querverteilung beeinflussenden Einstellparameter einer landwirtschaftlichen Ausbringmaschine.

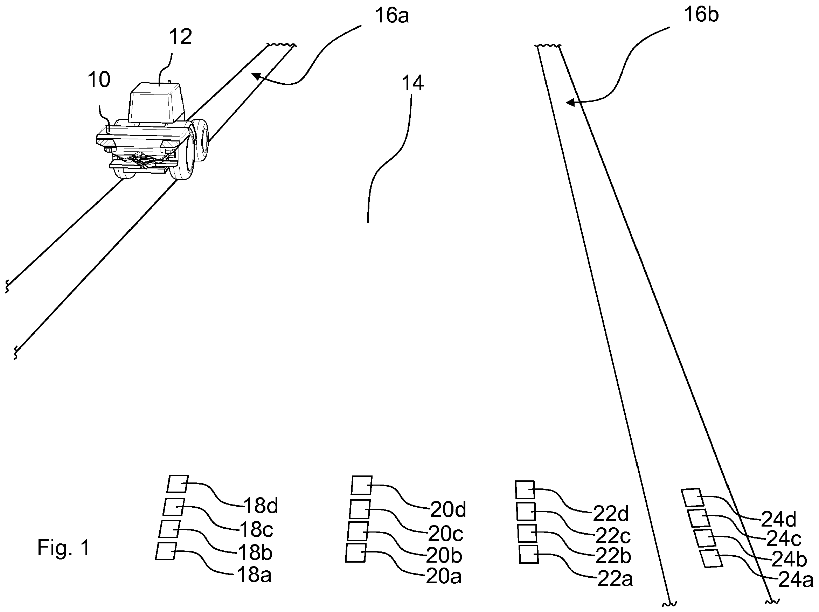

In der Fig. 1 wird zum Überprüfen der Querverteilung einer Streugutsorte zunächst eine Prüfausbringung durchgeführt. Im Rahmen der Prüfausbringung wird mittels einer als Zweischeiben-Düngerstreuer ausgebildeten landwirtschaftlichen Ausbringmaschine 10 eine Streugutsorte auf eine landwirtschaftliche Nutzfläche 14 ausgebracht. Die landwirtschaftliche Ausbringmaschine 10 wird von einem Traktor 12 getragen, welcher zunächst entlang der Fahrgasse 16a und nachfolgend entlang der Fahrgasse 16b fährt. Die Streugutsorte kann eine Einzeldüngersorte oder eine Mischdüngersorte sein.

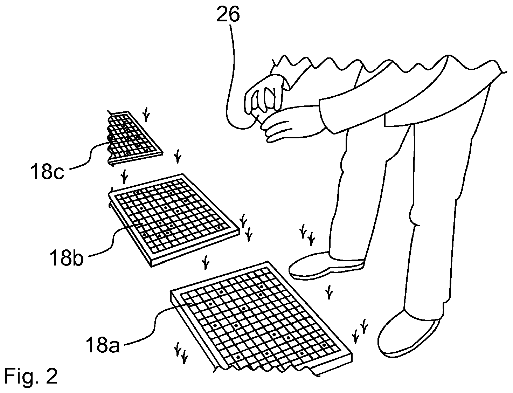

Zum Erfassen von Querverteilungsinformationen kommt ein mobiles Verfahren zum Einsatz. Die mittels des mobilen Verfahrens zu erfassenden Querverteilungsinformationen betreffen die tatsächliche Querverteilung 34 der während der Prüfausbringung ausgebrachten Streugutsorte auf der landwirtschaftlichen Nutzfläche 14. Das mobile Verfahren wird dabei teilweise direkt auf der landwirtschaftlichen Nutzfläche 14 und, wie in den Fig. 2 bis Fig. 4 dargestellt, unter Verwendung eines mobilen Endgeräts 26 durchgeführt.

Das mobile Verfahren umfasst dabei das Positionieren von mehreren Auffangeinrichtungen 18a-18d, 20a-20d, 22a-22d, 24a-24d auf der landwirtschaftlichen Nutzfläche 14 vor dem Durchführen der Prüfausbringung. Gruppen von jeweils vier Auffangeinrichtungen 18a-18d, 20a-20d, 22a-22d, 24a-24d sind im Rahmen des Verfahrens parallel zu den Fahrgassen 16a, 16b anzuordnen. Die Auffangeinrichtungen 18a-18d, 20a-20d, 22a-22d, 24a-24d sind als Kunststoffmatten ausgebildet und weisen auf ihrer Oberseite jeweils eine Vielzahl von Fangelementen, nämlich Noppen, auf. Mittels der Fangelemente werden einzelne Körner der Streugutsorte während der Prüfausbringung aufgefangen.

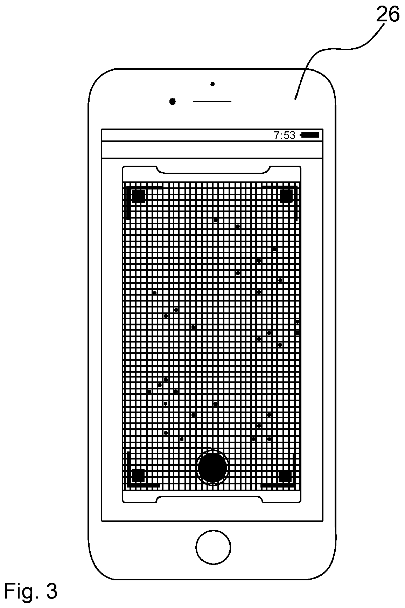

Gemäß der Fig. 2 und der Fig. 3 umfasst das mobile Verfahren ferner das Erzeugen von Bildmaterial, welches die Verteilung des von den Auffangeinrichtungen 18a-18d, 20a-20d, 22a-22d, 24a-24d während der Prüfausbringung aufgefangenen Streuguts betrifft. Das Erzeugen des Bildmaterials erfolgt unter Verwendung eines mobilen Endgeräts 26. Konkret wird das auszuwertende Bildmaterial über eine Anwendung auf dem mobilen Endgerät 26 erzeugt. Das erzeugte Bildmaterial sind Fotos der Auffangeinrichtungen 18a-18d, 20a-20d, 22a-22d, 24a-24d. Das erzeugte Bildmaterial wird anschließend zum Erfassen der Querverteilungsinformationen ausgewertet. Somit betreffen die Querverteilungsinformationen die tatsächliche Querverteilung 34 der während der Prüfausbringung ausgebrachten Streugutsorte auf der landwirtschaftlichen Nutzfläche 14. Das Auswerten des erzeugten Bildmaterials erfolgt dabei durch das mobile Endgerät 26. Alternativ kann das Auswerten des Bildmaterials zum Erfassen der Querverteilungsinformationen auch durch eine Auswerteeinrichtung 28 erfolgen.

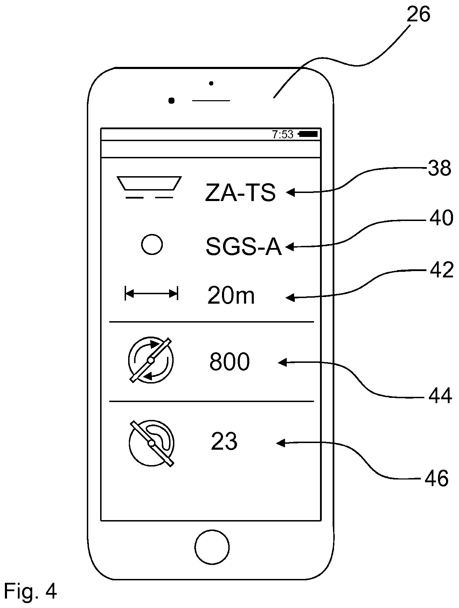

Gemäß der Fig. 4 kann der Benutzer über eine manuelle Eingabe an dem mobilen Endgerät 26 Geräteinformationen 38 bereitstellen, wobei die Geräteinformationen 38 in diesem Fall die Bezeichnung der während der Prüfausbringung verwendeten Ausbringmaschine 10 betrifft. Ferner werden über eine manuelle Eingabe des Benutzers Sorteninformationen 40 erfasst, welche die bei der Prüfausbringung ausgebrachte Streugutsorte betreffen. Ferner kann die beabsichtigte Arbeitsbreite 42 durch eine entsprechende manuelle Eingabe des Benutzers erfasst werden.

Das Verfahren umfasst außerdem das Erfassen von Einstellinformationen, welche die bei der Prüfausbringung eingestellten und die Querverteilung beeinflussenden Einstellparameter 44, 46 der landwirtschaftlichen Ausbringmaschine 10 betreffen. Die die Querverteilung beeinflussenden Einstellparameter 44, 46 der landwirtschaftlichen Ausbringmaschine 10 sind vorliegend die Scheibendrehzahl und der Aufgabepunkt des Streuguts auf die Verteilscheiben der landwirtschaftlichen Ausbringmaschine 10.

Die erfassten Querverteilungsinformationen sowie die manuell eingegebenen Geräteinformationen 38, Sorteninformationen 40 und Einstellinformationen werden dann einer Auswerteeinrichtung 28 bereitgestellt. Das Bereitstellen der erfassten Querverteilungsinformationen sowie der manuell eingegebenen Geräteinformationen 38, Sorteninformationen 40 und Einstellinformationen für die Auswerteeinrichtung 28 erfolgt durch Senden dieser Informationen von dem mobilen Endgerät 26 an die Auswerteeinrichtung 28 per Funk, beispielsweise per Mobilfunk.

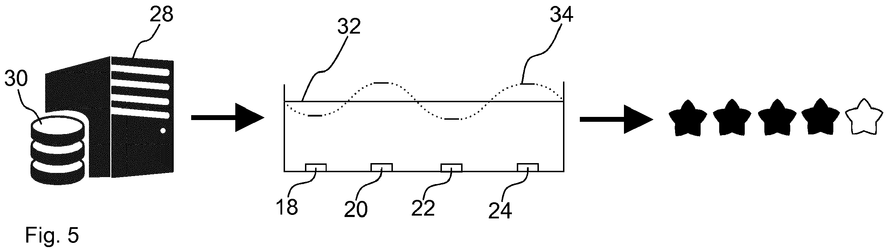

Die Fig. 5 zeigt eine entsprechende Auswerteeinrichtung 28, welche eine Datenbank 30 umfasst. Die Auswerteeinrichtung 28 vergleicht die bereitgestellten Querverteilungsinformationen, welche die tatsächliche Querverteilung 34 der während der Prüfausbringung ausgebrachten Streugutsorte auf der landwirtschaftlichen Nutzfläche 14 betreffen, mit einer für die durchgeführte Prüfausbringung erwarteten Querverteilung 32 der Streugutsorte. Vorliegend ist die erwartete Querverteilung 32 eine gleichmäßige Querverteilung, da im Rahmen der Prüfausbringung bereits eine gleichmäßige Verteilung angestrebt wurde und zwei Fahrten auf benachbarten Fahrgassen 16a, 16b ausgeführt wurden. Mittels des mobilen Verfahrens wurde die Querverteilung 34 zwischen den benachbarten Fahrgassen 16a, 16b erfasst. In Anwendungsfällen, in welchen keine gleichmäßige Querverteilung erwartet wird, können entsprechende Querverteilungsdaten von der Datenbank 30 abgerufen und in dem Vergleich mit der tatsächlichen Querverteilung 34 verwendet werden. Die tatsächliche Querverteilung 34 wird aus der während der Prüfausbringung von Auffangeinrichtungen 18-24 aufgefangenen Körnermenge der Streugutsorte berechnet bzw. abgeleitet.

Auf Grundlage des Vergleichs der tatsächlichen Querverteilung 34 mit der erwarteten Querverteilung 32 der Streugutsorte erfolgt eine Bewertung 36. Die Bewertung 36 zeigt, inwieweit die eingestellten und die Querverteilung beeinflussenden Einstellparameter 44, 46, also der Aufgabepunkt und die Scheibendrehzahl, tatsächlich zu dem erwarteten Verteilergebnis führen. In der Fig. 5 weicht die mittels des mobilen Verfahrens erfasste tatsächliche Querverteilung 34 lediglich geringfügig von der erwarteten gleichmäßigen Querverteilung 32 ab. Aus diesem Grund erfolgt eine vergleichsweise gute Bewertung mit 4 von 5 Sternen. Die Bewertung 36 zeigt, dass die eingestellten Einstellparameter 44, 46 sich zur Ausbringung der im Rahmen der Prüfausbringung ausgebrachten Streugutsorte 40 eignen.

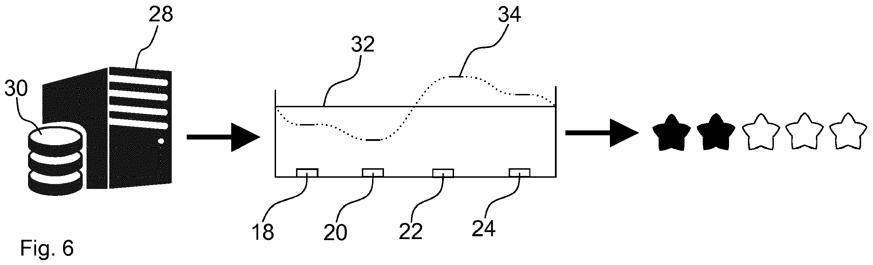

Die Fig. 6 zeigt einen durch eine Auswerteeinrichtung 28 durchgeführten Bewertungsvorgang, bei welchem die mittels des mobilen Verfahrens erfasste tatsächliche Querverteilung 34 vergleichsweise stark von der erwarteten gleichmäßigen Querverteilung 32 abweicht, sodass die Bewertung 36 lediglich zu 2 von 5 Sternen führt. Die Bewertung 36 zeigt in diesem Fall, dass die eingestellten Einstellparameter 44, 46 sich leidglich bedingt zur Ausbringung der im Rahmen der Prüfausbringung ausgebrachten Streugutsorte 40 eignen.

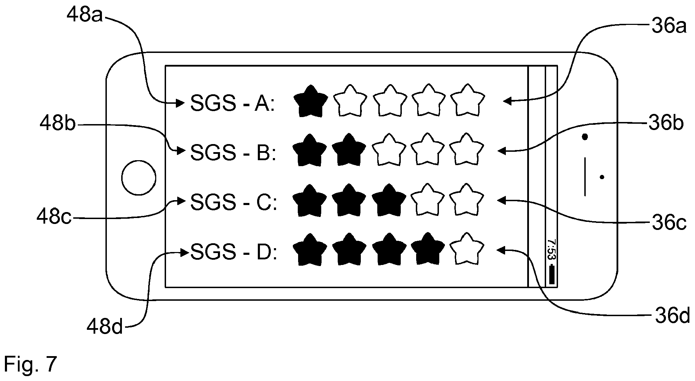

Aus einer Vielzahl von Bewertungen 36 von Prüfausbringungen können somit repräsentative sortenbezogene Bewertungen 36a-36d bereitgestellt werden, wie es in der Fig. 7 dargestellt ist. Ein Benutzer kann auf Grundlage der Bewertungen 36a-36d erkennen, welche Streugutsorten 48a-48d sich mit den bekannten Einstellparametern 44, 46 erwartungsgemäß ausbringen lassen und bei welchen Streugutsorten 48a-48d die tatsächliche Querverteilung 34 wahrscheinlich von der erwarteten Querverteilung 32 abweichen wird. Streugutsorten 48a-48d, welche sich erwartungsgemäß ausbringen lassen, weisen eine vergleichsweise hohe Bewertung 36a-36d auf. Streugutsorten 48a-48d, bei welchen die tatsächliche Querverteilung 34 wahrscheinlich von der erwarteten Querverteilung 32 abweichen wird, weisen eine vergleichsweise niedrige Bewertung 36a-36d auf.

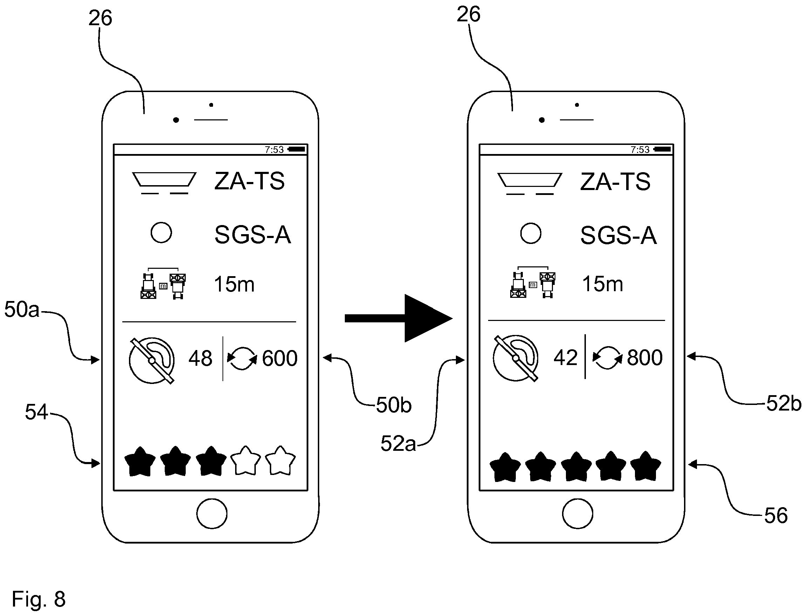

Die Fig. 8 zeigt, dass einem Benutzer im Rahmen des Verfahrens auch Empfehlungen 50a, 50b für die die Querverteilung beeinflussenden Einstellparameter der landwirtschaftlichen Ausbringmaschine 10 bereitgestellt werden können. Diese Empfehlungen 50a, 50b sind beispielsweise abhängig von der verwendeten Ausbringmaschine 10, der auszubringenden Streugutsorte und der beabsichtigten Arbeitsbreite. Den Benutzern wird auch eine Bewertungsmöglichkeit für die empfohlenen Einstellparameter 50a, 50b zur Verfügung gestellt. Die Benutzer können in diesem Fall durch eine manuelle Eingabe an dem mobilen Endgerät 26 mitteilen, inwieweit die beabsichtigte Querverteilung mit den empfohlenen Einstellparametern 50a, 50b umgesetzt wurde. Die von Benutzern abgegebenen Bewertungen 54 werden dann anderen Benutzern bereitgestellt, damit diese die vorliegenden Bewertungen 54 in die Auswahlentscheidung für oder gegen eine bestimmte Streugutsorte einfließen lassen können. Ferner können andere Benutzer durch die zur Verfügung stehenden Bewertungen 54 entscheiden, ob sie die empfohlenen Einstellparameter 50a, 50b ohne Anpassung bei der Ausbringung nutzen werden.

Wenn sich zeigt, dass die empfohlenen Einstellparameter 50a, 50b dauerhaft schlecht bewertet werden, kann eine Anpassung der empfohlenen Einstellparameter erfolgen. Eine entsprechende Anpassung ist in der Fig. 8 durch den zentralen Pfeil angedeutet.

Die Anpassung erfolgt dabei auf Grundlage mehrerer der Auswerteeinrichtung 28 bereitgestellter Querverteilungsinformationen, welche jeweils die tatsächliche Querverteilung 34 während unterschiedlicher Prüfausbringungen betreffen. Durch die Prüfausbringungen hat sich im vorliegenden Beispiel gezeigt, dass eine Anpassung des Aufgabepunkts von dem Einstellwert 48 auf den Einstellwert 42 bei gleichbleibender Drehzahl von 600 Umdrehungen pro Minute eine tatsächliche Querverteilung 34 ergibt, welche wesentlich näher an der erwarteten Querverteilung 32 liegt.

Die angepassten Empfehlungen 52a, 52b für die die Querverteilung beeinflussenden Einstellparameter der landwirtschaftlichen Ausbringmaschine 10 können den Benutzern dann über die Anwendung auf dem mobilen Endgerät 26 bereitgestellt werden. Alternativ oder zusätzlich können Benutzer auch mittels online abrufbarer angepasster Streutabellen über die angepassten Empfehlungen 52a, 52b informiert werden. Die Fig. 8 zeigt, dass die angepassten Empfehlungen 52a, 52b wesentlich bessere Bewertungen 56 von den Benutzern bekommen als die vorherigen Empfehlungen 50a, 50b.

Die Bewertung erfolgt vorliegend anhand der Vergabe von Sternen. Alternativ kann die Bewertung auch durch die Vergabe von Punkten, Noten oder Ähnlichem erfolgen.

### Bezugszeichen

- 10: Ausbringmaschine
- 12: Traktor
- 14: Nutzfläche
- 16a, 16b: Fahrgassen
- 18, 18a-18d: Auffangeinrichtungen
- 20, 20a-20d: Auffangeinrichtungen
- 22, 22a-22d: Auffangeinrichtungen
- 24, 24a-24d: Auffangeinrichtungen
- 26: mobiles Endgerät
- 28: Auswerteeinrichtung
- 30: Datenbank
- 32: erwartete Querverteilung
- 34: tatsächliche Querverteilung
- 36, 36a-36d: Bewertungen
- 38: Geräteinformationen
- 40: Sorteninformationen
- 42: Arbeitsbreite
- 44: Einstellparameter
- 46: Einstellparameter
- 48a-48d: Streugutsorten
- 50a, 50b: Einstellempfehlungen
- 52a, 52b: angepasste Einstellempfehlungen
- 54: Bewertung
- 56: Bewertung

## Patentansprüche

1. Verfahren zum Überprüfen der Querverteilung einer Streugutsorte, mit den Schritten:
- Durchführen einer Prüfausbringung einer Streugutsorte auf einer landwirtschaftlichen Nutzfläche (14) mittels einer landwirtschaftlichen Ausbringmaschine (10),
- Erfassen von Querverteilungsinformationen mittels eines mobilen Verfahrens, wobei die Querverteilungsinformationen die tatsächliche Querverteilung (34) der während der Prüfausbringung ausgebrachten Streugutsorte auf der landwirtschaftlichen Nutzfläche (14) betreffen; - Bereitstellen der erfassten Querverteilungsinformationen für eine Auswerteeinrichtung (28);
- Vergleichen der bereitgestellten Querverteilungsinformationen mit einer für die durchgeführte Prüfausbringung erwarteten Querverteilung (32) der Streugutsorte durch die Auswerteeinrichtung (28), und
- Bereitstellen von Empfehlungen (50a, 50b) für die die Querverteilung beeinflussenden Einstellparameter der landwirtschaftlichen Ausbringmaschine (10), insbesondere in Abhängigkeit einer beabsichtigten Querverteilung;
**gekennzeichnet durch** zumindest einen der folgenden Schritte:
- Bereitstellen einer Bewertungsmöglichkeit der empfohlenen Einstellparameter (50a, 50b, 52a, 52b) für einen Benutzer;
- Bereitstellen der von Benutzern abgegebenen Bewertungen (54, 56) zu empfohlenen Einstellparametern (50a, 50b, 52a, 52b) für andere Benutzer.

2. Verfahren nach Anspruch 1,
**gekennzeichnet durch** den Schritt:
- Bewerten der tatsächlichen Querverteilung (34) der während der Prüfausbringung ausgebrachten Streugutsorte auf Grundlage des Vergleichs der bereitgestellten Querverteilungsinformationen mit der für die durchgeführte Prüfausbringung erwarteten Querverteilung (32) der Streugutsorte durch die Auswerteeinrichtung (28).

3. Verfahren nach Anspruch 1 oder 2,
**gekennzeichnet durch** zumindest einen der folgenden Schritte:
- Erfassen von Einstellinformationen, welche die bei der Prüfausbringung eingestellten und die Querverteilung beeinflussenden Einstellparameter (44, 46) der landwirtschaftlichen Ausbringmaschine (10) betreffen;
- Bereitstellen der erfassten Einstellinformationen für die Auswerteeinrichtung (28);
- Ermitteln einer zu erwartenden Querverteilung (32) der Streugutsorte auf Grundlage der bereitgestellten Einstellinformationen durch die Auswerteeinrichtung (28).

4. Verfahren nach Anspruch 3,
**gekennzeichnet durch** den folgenden Schritt:
- Bewerten der bei der Prüfausbringung eingestellten und die Querverteilung beeinflussenden Einstellparameter (44, 46) der landwirtschaftlichen Ausbringmaschine (10) auf Grundlage des Vergleichs der ermittelten Querverteilungsinformationen mit der für die durchgeführte Prüfausbringung erwarteten Querverteilung (32) der Streugutsorte durch die Auswerteeinrichtung (28).

5. Verfahren nach einem der vorstehenden Ansprüche,
**gekennzeichnet durch** zumindest einen der folgenden Schritte:
- Anpassen der Empfehlungen (50a, 50b) für die die Querverteilung beeinflussenden Einstellparameter der landwirtschaftlichen Ausbringmaschine (10) auf Grundlage mehrerer der Auswerteeinrichtung (28) bereitgestellter Querverteilungsinformationen;
- Bereitstellen der angepassten Empfehlungen (52a, 52b) für die die Querverteilung beeinflussenden Einstellparameter der landwirtschaftlichen Ausbringmaschine (10).

6. Verfahren nach einem der vorstehenden Ansprüche,
**gekennzeichnet durch** zumindest einen der folgenden Schritte:
- Informieren eines Benutzers, dass eine bereitgestellte Empfehlung für die die Querverteilung beeinflussenden Einstellparameter der landwirtschaftlichen Ausbringmaschine (10) für einen geplanten Ausbringvorgang ungeeignet ist;
- Informieren eines Herstellers der Streugutsorte, dass sich die Querverteilungseigenschaften der Streugutsorte verändert haben.

7. Verfahren nach einem der vorstehenden Ansprüche,
**gekennzeichnet durch** zumindest einen der folgenden Schritte:
- Erfassen von Sorteninformationen (40), welche die bei der Prüfausbringung ausgebrachte Streugutsorte betreffen;
- Bereitstellen der erfassten Sorteninformationen (40) für die Auswerteeinrichtung (28);
- Ermitteln einer zu erwartenden Querverteilung (32) der Streugutsorte auf Grundlage der bereitgestellten Sorteninformationen (40) durch die Auswerteeinrichtung (28).

8. Verfahren nach Anspruch 7,
**dadurch gekennzeichnet, dass** das Erfassen der Sorteninformationen (40) zumindest einen der folgenden Schritte umfasst:
- manuelle Eingabe der Sorteninformationen (40) über eine Anwendung auf einem mobilen Endgerät (26);
- Auswerten von Bildmaterial zu der während der Prüfausbringung auf der landwirtschaftlichen Nutzfläche (14) auszubringenden oder ausgebrachten Streugutsorte.

9. Verfahren nach einem der vorstehenden Ansprüche,
**dadurch gekennzeichnet, dass** das mobile Verfahren zum Erfassen von Querverteilungsinformationen zumindest teilweise auf der landwirtschaftlichen Nutzfläche (14) und/oder unter Verwendung eines mobilen Endgeräts (26) ausgeführt wird.

10. Verfahren nach einem der vorstehenden Ansprüche,
**dadurch gekennzeichnet, dass** das mobile Verfahren zum Erfassen von Querverteilungsinformationen zumindest einen der folgenden Schritte umfasst:
- Positionieren von einer oder mehreren Auffangeinrichtungen (18,18a-18d, 20, 20a-20d, 22, 22a-22d, 24, 24a-24d) auf der landwirtschaftlichen Nutzfläche (14) vor dem Durchführen der Prüfausbringung;
- Erzeugen von Bildmaterial, welches die Verteilung des von der einen oder den mehreren Auffangeinrichtungen (18,18a-18d, 20, 20a-20d, 22, 22a-22d, 24, 24a-24d) während der Prüfausbringung aufgefangenen Streuguts betrifft;
- Auswerten des erzeugten Bildmaterials zum Erfassen der Querverteilungsinformationen.

## Claims

1. Method for checking the lateral distribution of a spreading material type, comprising the steps of:
- performing a test application of a spreading material type on an agricultural area (14) by means of an agricultural application machine (10),
- detecting lateral distribution information by means of a mobile method, the lateral distribution information relating to the actual lateral distribution (34) of the spreading material type applied during the test application on the agricultural area (14);
- providing the detected lateral distribution information for an analysis device (28);
- comparing the provided lateral distribution information with a lateral distribution (32) of the spreading material type that is expected for the performed test application, by means of the analysis device (28), and
- providing recommendations (50a, 50b) for the setting parameters of the agricultural application machine (10) that influence the lateral distribution, in particular on the basis of an intended lateral distribution;
**characterized by** at least one of the following steps:
- providing a user with an opportunity to evaluate the recommended setting parameters (50a, 50b, 52a, 52b);
- providing the evaluations (54, 56) input by users for recommended setting parameters (50a, 50b, 52a, 52b) to other users.

2. Method according to claim 1,
**characterized by** the step of:
- evaluating the actual lateral distribution (34) of the spreading material applied during the test application on the basis of the comparison of the provided lateral distribution information with the lateral distribution (32) of the spreading material type that is expected for the performed test application, by means of the analysis device (28).

3. Method according to either claim 1 or claim 2,
**characterized by** at least one of the following steps:
- detecting setting information relating to the setting parameters (44, 46) of the agricultural application machine (10) that are set during the test application and influence the lateral distribution;
- providing the detected setting information for the analysis device (28);
- determining a lateral distribution (32) of the spreading material type that is to be expected on the basis of the setting information provided by means of the analysis device (28).

4. Method according to claim 3,
**characterized by** the following step:
- evaluating the setting parameters (44, 46) of the agricultural application machine (10) that are set during the test application and influence the lateral distribution on the basis of the comparison of the determined lateral distribution information with the lateral distribution (32) of the spreading material type that is expected for the performed test application, by means of the analysis device (28).

5. Method according to any of the preceding claims,
**characterized by** at least one of the following steps:
- adapting the recommendations (50a, 50b) for the setting parameters of the agricultural application machine (10) that influence the lateral distribution on the basis of a plurality of items of lateral distribution information provided to the analysis device (28);
- providing the adapted recommendations (52a, 52b) for the setting parameters of the agricultural application machine (10) that influence the lateral distribution.

6. Method according to any of the preceding claims,
**characterized by** at least one of the following steps:
- informing a user that a provided recommendation for the setting parameters of the agricultural application machine (10) that influence the lateral distribution is unsuitable for a planned application process;
- informing a manufacturer of the spreading material type that the lateral distribution properties of the spreading material type have changed.

7. Method according to any of the preceding claims,
**characterized by** at least one of the following steps:
- capturing type information (40) relating to the spreading material type applied during the test application;
- providing the detected type information (40) for the analysis device (28);
- determining a lateral distribution (32) of the spreading material type that is to be expected on the basis of the provided type information (40) by means of the analysis device (28).

8. Method according to claim 7,
**characterized in that** detecting the type information (40) comprises at least one of the following steps:
- manually inputting the type information (40) via an application on a mobile terminal (26);
- analyzing image material relating to the spreading material type applied, or to be applied, during the test application on the agricultural area (14).

9. Method according to any of the preceding claims,
**characterized in that** the mobile method for detecting lateral distribution information is performed at least partially on the agricultural area (14) and/or using a mobile terminal (26).

10. Method according to any of the preceding claims,
**characterized in that** the mobile method for detecting the lateral distribution information comprises at least one of the following steps:
- positioning one or more collection devices (18,18a-18d, 20, 20a-20d, 22, 22a-22d, 24, 24a-24d) on the agricultural area (14) before performing the test application;
- generating visual material relating to the distribution of the spreading material collected by the one or more collection devices (18,18a-18d, 20, 20a-20d, 22, 22a-22d, 24, 24a-24d) during the test application;
- analyzing the generated image material to detect the lateral distribution information.

## Revendications

1. Procédé destiné à contrôler la répartition transversale d'un type de produit d'épandage, comportant les étapes de :
- réalisation d'un épandage test d'un type de produit d'épandage sur une surface utile agricole (14) à l'aide d'une machine d'épandage agricole (10),
- détection d'informations de répartition transversale à l'aide d'un procédé mobile, les information de répartition transversale concernant la répartition transversale effective (34) du type de produit d'épandage épandu pendant l'épandage test sur la surface utile agricole (14) ;
- mise à disposition des informations de répartition transversale détectées pour un dispositif d'analyse (28) ;
- comparaison des informations de répartition transversale mises à disposition avec une répartition transversale (32), attendue pour l'épandage test réalisé, du type de produit d'épandage par le dispositif d'analyse (28) et
- mise à disposition de recommandations (50a, 50b) pour les paramètres de réglage influençant la répartition transversale de la machine d'épandage agricole (10), en particulier en fonction d'une répartition transversale envisagée ;
**caractérisé par** au moins l'une des étapes suivantes :
- mise à disposition d'une possibilité d'évaluation des paramètres de réglage (50a, 50b, 52a, 52b) recommandés pour un utilisateur ;
- mise à disposition des évaluations (54, 56) émises par les utilisateurs concernant les paramètres de réglage (50a, 50b, 52a, 52b) recommandés pour d'autres utilisateurs.

2. Procédé selon la revendication 1,
**caractérisé par** l'étape :
- d'évaluation de la répartition transversale effective (34) du type de produit d'épandage épandu pendant l'épandage test sur la base de la comparaison des informations de répartition transversale mises à disposition avec la répartition transversale (32), attendue pour l'épandage test réalisé, du type de produit d'épandage par le dispositif d'analyse (28).

3. Procédé selon la revendication 1 ou 2,
**caractérisé par** au moins l'une des étapes suivantes :
- détection d'informations de réglage, qui concernent les paramètres de réglage (44, 46), réglés lors de l'épandage test et influençant la répartition transversale, de la machine d'épandage agricole (10) ;
- mise à disposition des informations de réglage détectées pour le dispositif d'analyse (28) ;
- détermination d'une répartition transversale (32) du type de produit d'épandage à attendre sur la base des informations de réglage mises à disposition par le dispositif d'analyse (28).

4. Procédé selon la revendication 3,
**caractérisé par** l'étape suivante :
- évaluation des paramètres de réglage (44, 46) de la machine d'épandage agricole (10) réglés lors de l'épandage test et influençant la répartition transversale sur la base de la comparaison des informations de répartition transversale déterminées avec la répartition transversale (32), attendue pour l'épandage test réalisé, du type de produit d'épandage par le dispositif d'analyse (28).

5. Procédé selon l'une des revendications précédentes,
**caractérisé par** au moins l'une des étapes suivantes :
- adaptation des recommandations (50a, 50b) pour les paramètres de réglage influençant la répartition transversale de la machine d'épandage agricole (10) sur la base de plusieurs des informations de répartition transversale mises à disposition du dispositif d'analyse (28) ;
- mise à disposition de recommandations adaptées (52a, 52b) pour les paramètres de réglage influençant la répartition transversale de la machine d'épandage agricole (10).

6. Procédé selon l'une des revendications précédentes,
**caractérisé par** au moins l'une des étapes suivantes :
- information d'un utilisateur qu'une recommandation mise à disposition pour les paramètres de réglage influençant la répartition transversale de la machine d'épandage agricole (10) ne convient pas à un processus d'épandage planifié ;
- information d'un fabricant du type de produit d'épandage que les propriétés de répartition transversale du type de produit d'épandage se sont modifiées.

7. Procédé selon l'une des revendications précédentes,
**caractérisé par** au moins l'une des étapes suivantes :
- détection d'informations de type (40), qui concernent le type de produit d'épandage épandu lors de l'épandage test ;
- mise à disposition des informations de type (40) détectées pour le dispositif d'analyse (28) ;
- détermination d'une répartition transversale (32) du type de produit d'épandage à attendre sur la base des informations de type (40) mises à disposition par le dispositif d'analyse (28).

8. Procédé selon la revendication 7,
**caractérisé en ce que** la détection des informations de type (40) comprend au moins l'une des étapes suivantes :
- entrée manuelle des informations de type (40) par l'intermédiaire d'une application sur un terminal mobile (26) ;
- analyse de matériau d'image concernant le type de produit d'épandage à épandre ou épandu pendant l'épandage test sur la surface utile agricole (14).

9. Procédé selon l'une des revendications précédentes,
**caractérisé en ce que** le procédé mobile destiné à détecter des informations de répartition transversale est mis en oeuvre au moins partiellement sur la surface utile agricole (14) et/ou à l'aide d'un terminal mobile (26).

10. Procédé selon l'une des revendications précédentes,
**caractérisé en ce que** le procédé mobile destiné à détecter des informations de répartition transversale comprend au moins l'une des étapes suivantes :
- positionnement d'un ou de plusieurs dispositifs de collecte (18,18a-18d, 20, 20a-20d, 22, 22a-22d, 24, 24a-24d) sur la surface utile agricole (14) avant la réalisation de l'épandage test ;
- génération de matériau d'image qui concerne la répartition du produit d'épandage collecté pendant l'épandage test par l'un ou les plusieurs dispositifs de collecte (18,18a-18d, 20, 20a-20d, 22, 22a-22d, 24, 24a-24d) ;
- analyse du matériau d'image généré pour la détection des informations de répartition transversale.
